# EUROPÄISCHE PATENTSCHRIFT

(11) **EP 2 729 711 B1**
(45) Veröffentlichungstag und Bekanntmachung des Hinweises auf die Patenterteilung: **14.10.2020**
(21) Anmeldenummer: 12734875.3
(22) Anmeldetag: 03.07.2012
(51) Int. Cl.: F16B 25/00

(54) **GEWINDEFORMENDE SCHRAUBE UND SCHRAUBVERBINDUNG SOWIE ROHLING ZUR HERSTELLUNG DER SCHRAUBE**
THREAD-FORMING SCREW AND SCREW CONNECTION, AND BLANK FOR PRODUCING THE SCREW
VIS FORMANT DES FILETS ET RACCORD FILETÉ AINSI QU'ÉBAUCHE POUR LA FABRICATION DE LA VIS

(30) Priorität: 05.07.2011 DE 102011078686
(43) Veröffentlichungstag der Anmeldung: 14.05.2014
(73) Patentinhaber: Baier & Michels GmbH & Co. KG, 64372 Ober-Ramstadt (DE)
(72) Erfinder: AMBROS, Olaf, 68647 Biblis (DE)
(74) Vertreter: Sommer, Peter
(86) Internationale Anmeldenummer: PCT/EP2012/062880
(87) Internationale Veröffentlichungsnummer: WO 2013/004682

(56) Entgegenhaltungen:
- DE-A1-102007 010 221
- US-A- 3 726 180
- US-A- 3 752 030

## Beschreibung

### Technisches Gebiet

Die Erfindung betrifft eine gewindeformende Schraube, aufweisend einen zumindest teilweise mit einem Gewinde versehenen Schaft und eine Schraubenspitze an einem Ende des Schafts, wobei der Schaft einen sich von der Schraubenspitze weg erstreckenden gewindeformenden Formbereich und einen sich daran anschließenden tragenden Bereich mit einem tragenden Gewinde sowie gegebenenfalls weitere sich an den tragenden Bereich anschließende Bereiche aufweist, wobei der Bereich mit dem tragenden Gewinde einen kreisrunden Querschnitt entspricht und eine Schraubverbindung mit dieser Schraube sowie einen Rohling zur Herstellung dieser Schraube.

Die Schraube kann dabei einen Schraubenkopf oder eine anders ausgebildete Antriebsseite zur Krafteinleitung über Kraftangriffsflächen aufweisen oder ohne Kopf etwa als Doppelgewindebolzen oder Stiftschraube, auch bezeichnet als Stehbolzen, ausgebildet sein.

### Stand der Technik

Die meisten der üblichen gewindeformenden Schrauben verfügen über den Querschnitt eines verrundeten Dreiecks. Diese als trilobular bezeichnete Geometrie beeinflusst die für das Gewindeformen nötigen Drehmomente positiv, ein Abdichten einer mit einer solchen Schraube hergestellten Schraubverbindung gegen Flüssigkeiten oder Gase ist jedoch nur durch ein zusätzliches Dichtmittel möglich. Diese Art der Abdichtung ist wegen der abrasiven Wirkung, die das geformte Gewinde des Mutternbauteils durch seine elastische Rückfederung auf die Gewindeflanken der Schraube auswirkt, auch nur in sehr beschränktem Maße möglich. Dies gilt insbesondere für sacklochartige Schraubverbindungen, bei denen der Furchbereich der Schraube noch aktiv im Eingriff steht und aufgrund der Verschraubungslänge das Dichtmittel in dieser Zone aufgebracht werden muss.

Aus der DE 10 2007 010 221 A1 ist eine Schraube mit einem gewindeformenden Gewinde zur Erzeugung eines metrischen Gewindes bekannt, das einen formgebenden Gewindeabschnitt an der Spitze und einen tragenden Gewindeabschnitt umfasst. Weiterhin ist offenbart, dass ein zylindrisches Gewinde gegenüber trilobularen Schrauben den Vorteil hat, dass das Gewinde gegenüber Gasen und Flüssigkeiten zumindest bei kleinen Druckdifferenzen dicht ist. Eine weitere Schraube ist aus der DE 10 2009 025 222 A1 bekannt.

Das Problem besteht darin, eine formgebende Schraube bereit zu stellen, die für Direktverschraubungen eine verbesserte Dichtheit der Schraubverbindung gegenüber Gasen und Flüssigkeiten bereitstellt.

### Beschreibung der Erfindung

Die erfindungsgemäße gewindeformende Schraube weist einen zumindest teilweise mit einem Gewinde versehenen Schaft und eine Schraubenspitze am dem Schraubenkopf abgewandten Ende des Schafts auf. Der Schaft weist einen sich von der Schraubenspitze weg erstreckenden gewindeformenden Gewindeabschnitt und einen sich daran anschließenden tragenden Gewindeabschnitt sowie gegebenenfalls weitere sich daran anschließende Bereiche auf, wobei der tragende Gewindeabschnitt einen kreisrunden Querschnitt aufweist. Der tragende Gewindeabschnitt weist in Richtung von der Schraubenspitze weg und zum Schraubenkopf hin eine Zunahme eines Flankendurchmessers und/oder eines Außendurchmessers in einem Verhältnis von 1: 100 bis 1:500 bezogen auf die Länge LG des tragenden Gewindeabschnitts auf, vorzugsweise in einem Verhältnis bis 1:400, wobei die Zunahme des Flankendurchmessers DF und/oder des Außendurchmessers DA über die Länge LG des tragenden Bereichs konstant verläuft.

Der dem Formbereich in Richtung zum Schraubenkopf hin nachgeschaltete vollwertig nutzbarer tragender Bereich des Gewindes ermöglicht durch die Konizität im angegebenen Verhältnis die Aufrechterhaltung einer dichtenden Anlage der Gewindegänge der Schraube im tragenden Bereich einerseits an die im Bauteil geformten Gewindegänge andererseits.

Durch diese konische Ausprägung des tragenden Gewindeteils wird auch bei fortschreitender Einschraubtiefe dem Einebnen und Glätten der geformten Gewindegänge entgegengewirkt, und somit eine definierte Klemmung, bzw. dichtende Anlage der Gewindeflanken aufrechterhalten. Somit wird eine gewindeformende Schraube bereitgestellt, die eine definierte Selbsthemmung sowie eine verbesserte Dichtfunktion aufweist.

Diese Wirkung lässt sich anschaulich in Einschraubdiagrammen beobachten, indem das für Direktverschraubungen typische Einbrechen des Drehmoments, nachdem der Furchbereich der Schraube aus dem Bauteil ausgetreten ist, verringert ist oder sogar ganz entfällt und somit eine deutliche Klemmwirkung ersichtlich ist.

Weiterhin führt die konische Ausprägung ebenfalls zu einer Erhöhung des sog. Überdrehmoments, also desjenigen aufgebrachten Drehmoments, bei dem die Schraubverbindung mechanisch versagt, was insbesondere bei Dünnblechschrauben eine positive Wirkung auf die Verbaubarkeit hervorruft.

Der Aufbau einer definierten Vorspannkraft im Gewinde sichert eine ausreichende Befestigung des zu befestigenden Bauteils, auch als Fügegut bezeichnet an dem die Schraubverbindung aufweisenden Bauteil, auch als Mutternbauteil bezeichnet.

Zwar wird die Momentendifferenz zwischen dem Einfurchmoment der Schraube zum Formen eines Gewindes im Mutternbauteil und dem Anziehdrehmoment zum Erreichen der geforderten Vorspannkraft gegenüber einer üblichen gewindefurchenden Schraubverbindung ohne konische Querschnittszunahme im tragenden Gewindeabschnitt durch die erfindungsgemäße konstante Zunahme und die sich dadurch ausgebildete Konizität des tragenden Gewindeabschnitts verändert, dies ist jedoch nicht nachteilig, da sich bedingt durch die Klemmwirkung und/oder Reibung des Mutterngewindes auf die Schraube in ebensolchem Maße das Überdrehmomet der Schraubverbindung erhöht und somit auch höhere Anziehdrehmomente zur Erzielung der geforderten Vorspannkraft möglich sind.

Die Schraube mit dem erfindungsgemäßen Kegelverhältnis unterscheidet sich deutlich von dem bereits von einem metrischen oder zölligen Außengewinde für selbstdichtende Rohrverbindungen, wie sie etwa aus der DIN 158-1 und der DIN 202 her bekannt sind. Das dort verwendete Kegelverhältnis von 1:16 erlaubt ein mehr oder weniger leichtgängiges Fügen beider bereits mit einem Gewinde versehenen Bauteile bis zu einem gewissen Punkt. Die danach eintretende Schwergängigkeit bis hin zur Verblockung stellt abschließend die ohne Dichtmittel eintretende Dichtwirkung innerhalb der Verbindung her. Eine Kombination eines Gewindes oben genannter Art mit einer zum Formen eines entsprechenden Mutterngewindes geeigneten Formzone würde, insbesondere bei sacklochartigen Verbindungen, aufgrund der großen Kegelsteigung zu einer drastischen Erhöhung des Einschraubmoments führen, was das Aufbringen einer entsprechend hohen definierten Vorspannkraft auf das Fügegut unmöglich macht. Daher ist das Kegelverhältnis so gewählt, dass lediglich dem Verlust der elastischen Rückfederung des geformten Mutterngewindes entgegengewirkt wird, bzw. dieser Effekt noch leicht verstärkt wird.

Die gleichmäßige Steigung des Kegels bewirkt ein gleichmäßige Aufrechterhaltung oder Steigerung der oben beschriebenen Klemmwirkung, sowie ebenso ein gleichmäßiges Aufbringen der dichtenden Anlage des Mutterngewindes auf die Schraube über den gesamten tragenden Gewindeteil hinweg.

Gemäß einer vorteilhaften Weiterbildung kann der formgebende Gewindeabschnitt einen vom Querschnitt des tragenden Gewindeabschnitts abweichenden Querschnitt aufweisen, insbesondere einen trilobularen Querschnitt.

Damit können günstige Eigenschaften einer formgebenden Spitze mit beispielsweise trilobularem Querschnitt mit den Vorteilen eines erfindungsgemäß ausgestalteten tragenden Gewindeabschnitts mit einem kreisrunden Querschnitt kombiniert werden und die an sich nicht dichtenden gewindeformenden Schrauben mit trilobularer Geometrie des gewindeformenden Bereichs können auch zur Abdichtung verwendet werden.

Vorteilhafterweise kann die Länge LG des tragenden Bereichs mindestens der 3-fachen Steigung des Gewindes im tragenden Gewindeabschnitt entsprechen. Über die Gewindegänge wird die Klemm- und Dichtwirkung beeinflusst, wobei selbst dann, wenn einer der Gewindegänge nicht vollständig ausgebildet sein sollte, wegen des Strömungswiderstandes im geformten Gewinde insgesamt noch eine ausreichende Dichtwirkung erzielt werden kann.

Vorteilhafterweise kann die Länge des tragenden Bereichs mindestens das 0,8-fache des Nenndurchmessers DN der Schraube betragen.

Ein weiterer Gegenstand der Erfindung ist eine Schraubverbindung, umfassend eine gewindeformende Schraube und ein Bauteil mit einer Ausnehmung für diese Schraube. Die Schraube ist dabei wie vorstehend beschrieben ausgebildet.

Derartige Schraubverbindungen dienen in der Regel zur Befestigung eines zu befestigenden Bauteils, also dem Fügegut an dem die Schraubverbindung aufweisenden Bauteil, also am Mutternbauteil. Auch wenn im Gegensatz zu Ölablassschrauben oder Dichtstopfen mit einem Kegelverhältnis von 1:16 ein mehrmaliges Einschrauben die Dichtwirkung herab setzt oder ausschließt, sind derartige Schraubverbindungen in der Praxis für solche Bauteile relevant, die nach dem Fügen nicht mehr gelöst werden müssen.

Ein weiterer Gegenstand der Erfindung ist ein Rohling zur Herstellung einer vorstehend beschriebenen Schraube. Der Rohling weist einen sich von einer späteren Schraubenspitze weg erstreckenden späteren gewindeformenden Gewindeabschnitt und einen sich daran anschließenden späteren tragenden Gewindeabschnitt mit einem tragenden Gewinde sowie gegebenenfalls weitere sich später an den tragenden Bereich anschließende Bereiche auf und weist im späteren tragenden Gewindeabschnitt einen kreisrunden Querschnitt sowie eine der dem späteren Gewindeabschnitt entsprechende Konizität auf.

Damit ist bereits am Rohling die entsprechende Konizität vorgegeben, um im anschließenden Walzprozess eine bestmögliche Formfüllung und konturgenaue Ausprägung des Gewindeprofils des tragenden Gewindeabschnitts entsprechend der vorgegebenen Walzwerkzeugsgeometrie zu erhalten. Die Außengeometrie des Rohlings stellt somit idealerweise eine Parallelverschiebung der Flankendurchmessergeometrie des späteren Gewindes dar.

Vorteilhafterweise kann der Rohling im dem späteren formgebenden Gewindeabschnitt einen kreisrunden oder trilobularen oder multilobularen Querschnitt aufweisen.

### Kurze Beschreibung der Zeichnungen

Die erfindungsgemäße Schraube wird anhand der Zeichnung erläutert. Es zeigt:
- Fig. 1: eine erfindungsgemäße Schraube mit einem gewinde-formenden Gewinde und Mutternteil,
- Fig. 2A: die Schraube aus Fig. 1 in einer Sicht auf die einen kreisrunden Querschnitt aufweisende Spitze,
- Fig. 2B: die Schraube aus Fig. 1 in einer Sicht auf die einen trilobularen Querschnitt aufweisende Spitze,
- Fig. 3: eine schematische Darstellung des tragenden Gewindeabschnitts,
- Fig. 4: eine Prinzipskizze zur Erläuterung der Gewindeflanken;
- Fig. 5: eine erste Ausführung des tragenden Gewindeabschnitts der Schraube aus Fig. 1;
- Fig. 6: eine zweite Ausführung des tragenden Gewindeabschnitts der Schraube aus Fig. 1;
- Fig. 7A: einen Rohling zur Herstellung einer erfindungsgemäßen Schraube mit einer einen kreisrunden Querschnitt aufweisenden Spitze;
- Fig. 7B: einen Rohling zur Herstellung einer erfindungsgemäßen Schraube mit einer einen trilobularen Querschnitt aufweisenden Spitze;
- Fig. 8: ein Diagramm zur Gegenüberstellung des Kraftverlaufs beim Einschrauben einer Schraube mit und einer Schraube ohne Konus.

### Ausführungsform(en) der Erfindung

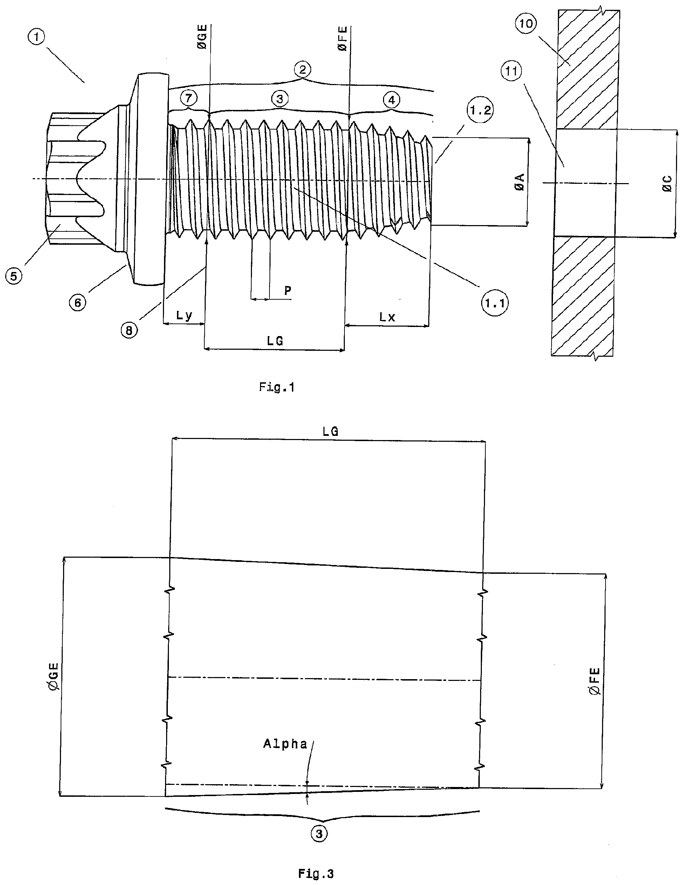

In Fig. 1 ist eine Schraube 1 mit einem gewindeformenden Gewinde dargestellt. Das in einem Schaft 1.1 eingebrachte Gewinde 2 umfasst einen tragenden Gewindeabschnitt 3 mit einem Gewinde mit kreisrundem Querschnitt über eine Länge LG und einen sich daran anschließenden und sich zur Schraubenspitze 1.2 hin verjüngenden und für die Formung eines Gewindes in einem Mutternteil 10 zuständigen Gewindeabschnitt 4 mit einer von der Schraubenspitze her gesehenen Länge Lx.

Am anderen Ende der Schraube ist ein Schraubenkopf 5 mit einer Auflage 6 vorgesehen, an den sich ein Gewindeauslauf 7 der Länge Ly des Gewindes 2 anschließt, der dann in den tragenden Gewindeabschnitt 3 übergeht. An dieser Übergangsstelle 8 hat der tragende Gewindeabschnitt 3 seinen größten Flanken- und/oder Außendurchmesser GE.

Die Gewindegänge des sich verjüngenden Gewindeabschnitts 4 sind scharfkantig ausgebildet und tragen zur Formung des Gewindes bei, sobald sie in das Mutternteil 10 eingreifen. Die Steigung des Gewindes im sich verjüngenden Gewindeteil 4 entspricht der des tragenden Gewindeteils 3, wobei aber der Durchmesser des sich verjüngenden Gewindeabschnitts 4 gegenüber dem Durchmesser des tragenden Gewindeteils 3 bis auf einen Enddurchmesser A verringert ist, der wiederum kleiner als ein Durchmesser C am Mutternteil 10 ist.

Durch das scharfkantige und voll ausgeprägte Gewinde im sich verjüngenden Gewindeabschnitt 4 ist das Ansetzten der Schraube 1 am Mutternteil 10 und der Beginn des Einformens des im Eingriff stehenden Gewindegangs leichter als bei einer abgestumpften Gewindespitze. Der sich verjüngende Gewindebereich 4 weist eine Länge Lx des 0,5-fachen bis 1-fachen Gewindenenndurchmessers DN auf. Dadurch ergibt sich ein Verhältnis von der Länge Lx zur Gewindesteigung von 4 bis 5, vorzugsweise von 4 2/3.

Die Besonderheit des Gewindes 2 liegt im tragenden Gewindebereich 3, der gegenüber einem streng metrischen Normgewinde mit konstantem Flankendurchmesser oder Außendurchmesser einen von der Schraubenspitze zum Kopf hin zunehmenden Flankendurchmesser oder Außendurchmesser aufweist, wobei im Übergangsbereich zwischen dem tragenden Gewindeabschnitt 3 und dem sich verjüngenden, formenden Gewindeabschnitt 4 ein kleinerer Flankendurchmesser oder Außendurchmesser FE als im Übergangsbereich 8 zwischen dem tragenden Gewindeabschnitt 3 und dem Gewindeauslauf 7 mit einem Flankendurchmesser oder Außendurchmesser GE vorliegt. Der Flanken- oder Außendurchmesser FE, der dem nominalen Nenndurchmesser entspricht, vergrößert sich also in Richtung zum Übergangsbereich hin.

Die Zunahme d des Flankendurchmessers DF und/oder des Außendurchmessers DA über die Länge LG des tragenden Gewindeabschnitts 3 in Richtung von der Schraubenspitze 1.2 liegt in einem Verhältnis von 1:50 bis 1:500 bezogen auf die Länge LG des tragenden Bereichs, vorzugsweise in einem Verhältnis DA oder DF zu LG von 1:100 bis 1:400. Die Zunahme des Flankendurchmessers DF und/oder des Außendurchmessers DA des tragenden Bereichs verläuft konstant, sodass sich der tragende Gewindeabschnitt von der Schraubenspitze her gesehen konisch erweitert.

Die Länge LG des tragenden Bereichs beträgt ein Vielfaches der Steigung p des Gewindes im tragenden Gewindeabschnitt 3 entspricht.

Die in Fig. 1 dargestellte Schraubverbindung umfasst die gewindeformende Schraube 1 und ein eine Ausnehmung 11 zur Aufnahme der Schraube aufweisendes Mutternteil 10. Der Kernlochdurchmesser C der Ausnehmung 11 im Mutternteil 10 ist größer als der Durchmesser A am Schraubenende 1.2, wobei der Kernlochdurchmesser C aber kleiner als ein Gewindedurchmesser FE am Übergang eines ersten, sich gegenüber dem metrischen Gewindeabschnitts 3 verjüngenden Gewindeabschnitts 4 ist.

Mit einer erfindungsgemäßen Schraube 1 lässt sich ein kraftschlüssiger Eingriff in das Mutternteil 10 herstellen, der wegen der Zunahme des Durchmessers im tragenden Gewindeabschnitt zudem über einen verstärkten Formschluss die Schraubverbindung noch zuverlässiger abdichtet, als das bei einer Schraubverbindung mit einem selbstgeformten zylindrischen Gewinde der Fall ist, sodass das Gewinde gegenüber Gasen und Flüssigkeiten auch noch bei höheren Druckdifferenzen dicht ist.

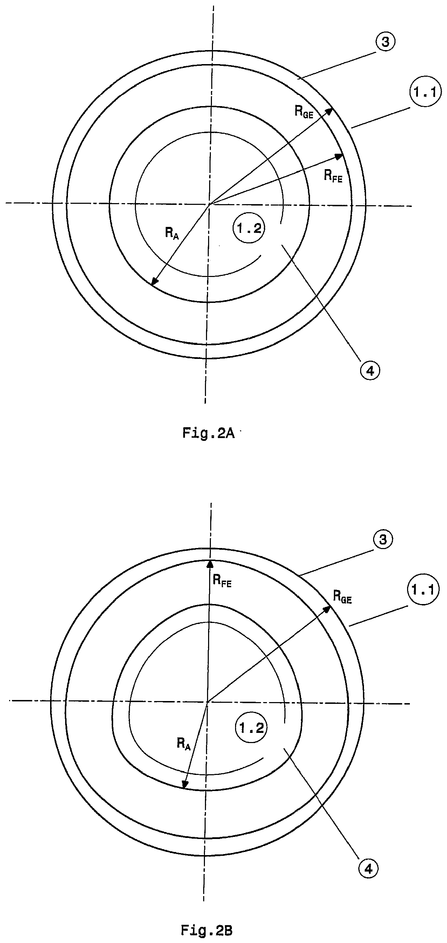

In Fig. 2A ist dargestellt, dass der Formbereich 4 einen von der Spitze 1.2 mit einem Radius RA ausgehenden, bis zum kreisrunden Querschnitt mit einem Radius RFE des tragenden Gewindeabschnitts 3 kreisrunden Querschnitt oder einen davon abweichenden Querschnitt, hier einen in Fig. 2B dargestellten trilobularen Querschnitt, aufweisen kann. Der tragende Gewindeabschnitt 3 mit seinem kreisrunden Querschnitt vergrößert sich jeweils unabhängig von der Geometrie der Spitze 1.2 und des Formbereichs 4 von einem Radius RFE auf einen Radius RGE.

In Fig. 3 ist die konische Form des tragenden Gewindeabschnitts 3 schematisch dargestellt. Ausgehend von dem kleineren Durchmesser FE wächst der Durchmesser in einem Konuswinkel Alpha über die Länge LG auf den Durchmesser GE an.

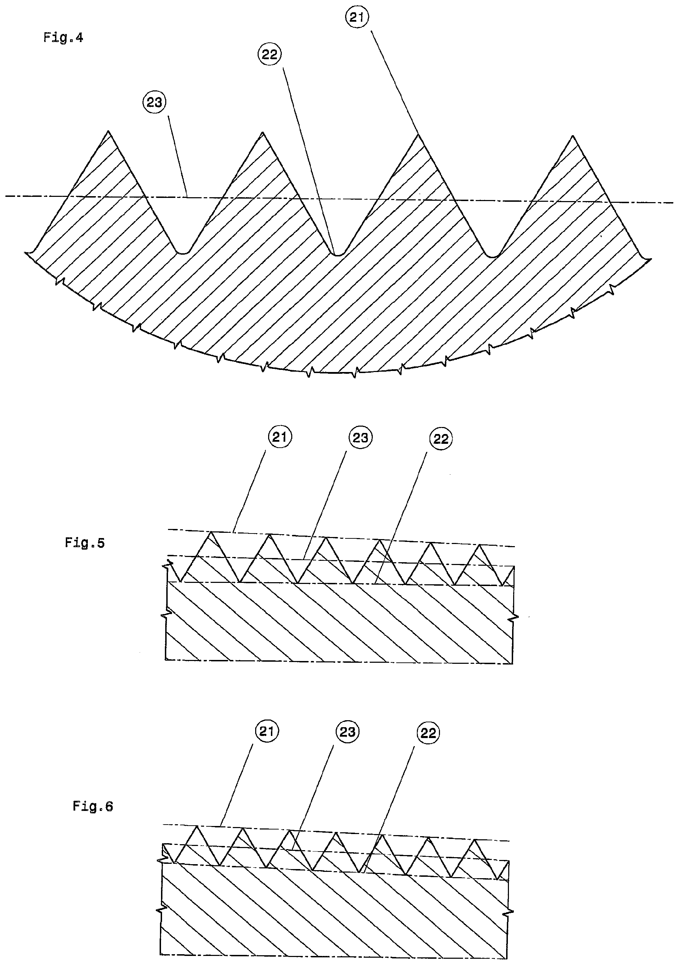

In den Fig. 4-6 sind verschiedene Gewindegestaltungen gezeigt. In Fig. 4 ist zunächst der prinzipielle Aufbau eines einzelnen Gewindegangs mit Gewindespitze 21 und Gewindegrund 22 gezeigt, wobei der Flankendurchmesser 23 genau dazwischen liegt, dargestellt durch die gestrichelte Linie.

In Fig. 5 steigt der Flankendurchmesser 23 bei konstantem Durchmesser des Gewindegrunds 22 an, da die Gewindespitzen 21 steigen und die Gewindehöhe, also die Differenz zwischen Gewindespitze 21 und Gewindeboden 22 damit zunimmt.

In Fig. 6 bleibt die Gewindehöhe gleich und der Durchmesser des Gewindegrundes 22 steigt mit demselben Konuswinkel wie der der Gewindespitzen 21. Da der Konuswinkel sehr klein ist, also im Bereich von 0,1° - 1,5°, lassen sich beide Arten herstellen, ohne dass das Aussehen einer metrischen Schraube mit bloßem Auge wahrnehmbar verändert wird.

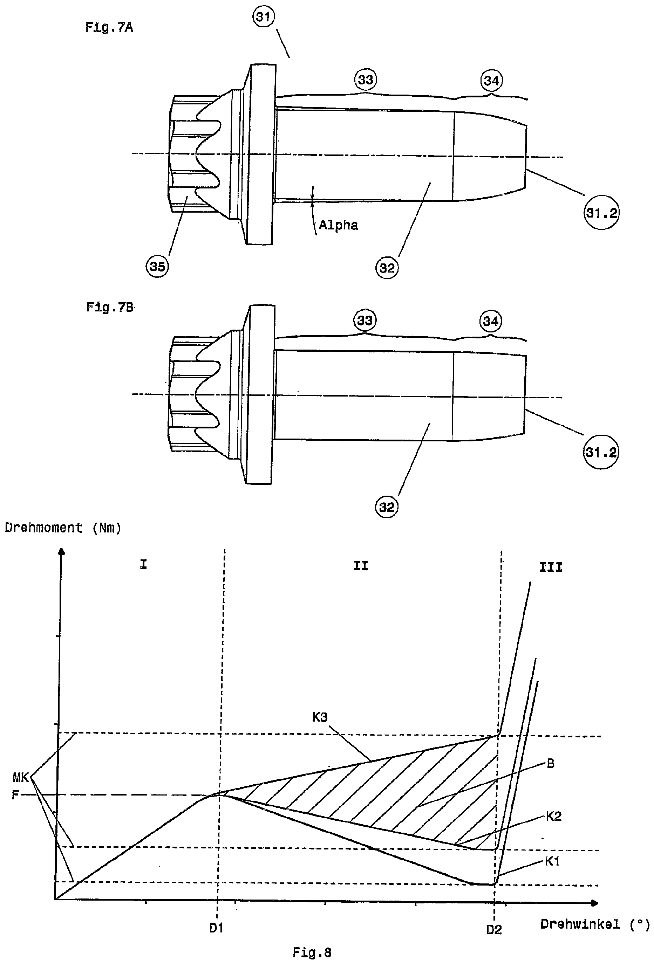

In Fig. 7A ist ein Rohling 31 zur Herstellung einer Schraube dargestellt, der einen Schaft 31.1 mit einem sich von einer späteren Schraubenspitze 31.2 weg erstreckenden späteren gewindeformenden Formbereich 34 und einen sich daran anschließenden späteren tragenden Gewindeabschnitt 33 mit einem tragenden Gewinde sowie gegebenenfalls weitere sich später an den tragenden Gewindeabschnitt anschließende Bereiche aufweist. Der Rohling 31 weist zumindest im späteren tragenden Gewindeabschnitt 33 einen kreisrunden Querschnitt und eine der herzustellenden Schraube entsprechende Konizität mit einem Winkel Alpha auf, sodass sich der Querschnitt des späteren tragenden Gewindeabschnitts 33 von dem sich an den Formbereich 34 anschließenden Ende zu dem dem Kopf 35 zugewandten Ende vergrößert.

Darüber hinaus ist der Querschnitt in dem späteren gewindeformenden Gewindebereich 34 ebenfalls kreisrund und weist einen zur Spitze 31.2 hin verjüngten Querschnitt auf.

In Fig. 7B ist eine andere Ausgestaltung des Formbereichs 34 des Rohlings 31 dargestellt, nämlich ein trilobularer Querschnitt ebenfalls mit einer Verjüngung des Querschnitts zur Spitze 31.2 hin, wobei der tragende Gewindebereich 33 wie in Fig. 7A ausgebildet ist.

Das in Fig. 8 dargestellte Diagramm zeigt den qualitativen Zusammenhang zwischen dem Drehmoment und dem Drehwinkel der Schraube beim Einschrauben als Direktverschraubung in ein Durchgangsloch eines Mutternbauteils ohne eigene Gewindegänge. Das Drehmoment ist in Nm angegeben und der Drehwinkel ist in Grad angegeben und entspricht auch einer Einschraubtiefe bei der Direktverschraubung.

Es sind drei Kurven K1, K2, K3 dargestellt, wobei die unterste Kurve K1 einer marktüblichen gewindefurchenden Schraube entspricht und die darüber liegenden Kurven K2 und K3 einer erfindungsgemäßen gewindefurchenden Schraube mit konisch ausgeprägtem tragenden Gewindebereich. Die Kurve K2 unterscheidet sich von der Kurve K3 durch den Konuswinkel des konisch ausgeprägten tragenden Gewindebereichs, wobei der Konuswinkel der Kurve K3 größer ist als der der Kurve K2. Die vom Einsatzzweck der Schraubverbindung abhängige erforderliche Selbsthemmung der Schraubverbindung kann über die Auswahl eines geeigneten Konuswinkels für die Schraube erfolgen, was durch den schraffiert angegebenen Bereich B verdeutlicht wird, der ein Feld von verschiedenen Konuswinkeln und der dazugehörigen Kurve darstellt, wobei der Bereich B von den Kurven K2, K3 begrenzt wird.

Die drei Kurven K1, K2 und K3 sind über den Drehwinkel gesehen in drei Abschnitte I, II und III unterteilt. Im ersten Abschnitt I ist der Verlauf des Furchmoments dargestellt und alle drei Kurven K1, K2 und K3 liegen aufeinander und weisen im vorliegenden Fall einen im wesentlichen linearen Anstieg des Drehmoments vom ersten Eingriff des Furchbereichs bis zum Erreichen des maximalen Furchmoments F beim Ausbilden des größten Gewindedurchmessers des Furchbereichs auf. Dies wird bei einem Drehwinkel D1 erreicht. Während dem Eindrehen der Schraube findet eine plastische und eine elastische Verformung des Mutternteils statt, wobei Gewindegänge im Mutternteil ausgebildet werden. Der tatsächliche Anstieg selbst hängt von der Geometrie des Furchbereichs ab und kann von einem linearen Verlauf abweichen. Dabei unterscheiden sich auch die Furchmomente eines kreisrunden Furchbereichs und eines trilobularen Furchbereichs so, dass letztere in der Regel niedriger sind. Aus Gründen der Vergleichbarkeit sind die Furchbereiche der Schrauben, für die die Kurven K1-K3 angegeben sind, gleich ausgebildet.

Im daran anschließenden Abschnitt II ist der Furchbereich durch das Durchgangsloch im Mutternteil hindurchgetreten und bei weiter zunehmendem Drehwinkel findet eine als Glättung anzusehende plastische Verformung des im Mutternteil geformten Gewindes statt. Sobald die Glättung abgeschlossen ist, was vor dem Erreichen eines Drehwinkels D2 der Fall ist, verbleibt nur noch das durch die elastische Rückfederung der Verformung hervorgerufene Klemmmoment MK, welches eine Klemmung oder eine Selbsthemmung hervorruft. Es ist ersichtlich, dass das Klemmmoment der einer marktüblichen gewindefurchenden Schraube entsprechenden Kurve K1 unterhalb des Klemmmoments der erfindungsgemäßen gewindefurchenden Schrauben mit konisch ausgeprägtem tragenden Gewindebereich liegt, wobei das Klemmmoment der Kurve K2 zwar oberhalb des Klemmmoments der Kurve K1 liegt, aber unterhalb des Klemmmoments der Kurve K3 und immer noch unterhalb des maximalen Furchmoments F. Das Klemmmoment der Kurve 3 liegt hingegen sogar höher als das maximale Furchmoment F.

Bei einem kleinen Konuswinkel wird mit zunehmenden Drehwinkel, also mit fortschreitendem Einschrauben, die sich einstellende Glättung der im Mutternteil geformten Gewindegänge aufgrund der Querschnittszunahme zumindest teilweise ausgeglichen. Bei einem größeren Konuswinkel erfolgt zusätzlich eine weitere Materialverdrängung und damit steigt die Klemmung und das Klemmmoment weiter an.

Durch ein formschlüssiges Anlegen der Gewindegänge des Mutterngewindes im Mutternbauteil an die Gewindegänge der gewindeformenden Schraube stellt sich eine Dichtwirkung ein, die gegenüber den marktüblichen gewindefurchenden Schrauben deutlich verbessert ist.

Im Abschnitt III kommt es mit weiter fortschreitendem Eindrehen der Schraube beim Erreichen eines Drehwinkels D2 zur Auflage des Schraubenkopfes auf das Mutternbauteil bzw. auf ein dazwischen befindliches Fügeteil, was zu einem Verblocken der Schraube führt. Bei einer weiteren Erhöhung des Drehwinkels kommt es in der Regel zu einem Versagen des Mutternbauteils und die Schraube wird das Mutterngewinde beschädigen. Die Kurven K1, K2 und K3 enden also im Abschnitt III, wenn die Schraubverbindung bei Erreichen des Überdrehmoments, auch als Versagensdrehmoment bezeichnet, versagt. Die Enden der Kurven K1, K2 und K3 liegen übereinander, d.h. mit zunehmendem Konuswinkel steigt auch das Überdrehmoment der Schraubverbindung.

## Patentansprüche

1. Gewindeformende Schraube, aufweisend zumindest teilweise mit einem Gewinde (2) versehenen Schaft (1.1) und eine Schraubenspitze (1.2) an einem Ende des Schafts (1.1), wobei der Schaft (1.1) einen sich von der Schraubenspitze (1.2) weg erstreckenden gewindeformenden Gewindeabschnitt (4) und einen sich daran anschließenden tragenden Gewindeabschnitt (3) aufweist, wobei der tragende Gewindeabschnitt (3) einen kreisrunden Querschnitt aufweist, **dadurch gekennzeichnet, dass** der tragende Gewindeabschnitt (3) in Richtung von der Schraubenspitze (1.2) weg eine Zunahme d eines Flankendurchmessers DF und/oder eines Außendurchmessers DA des Gewindes in einem Verhältnis von 1:100 bis 1:500 bezogen auf eine Länge LG des tragenden Gewindeabschnitts (3) aufweist, vorzugsweise in einem Verhältnis DA oder DF zu LG bis 1:400, wobei die Zunahme d des Flankendurchmessers DF und/oder des Außendurchmessers DA über die Länge LG des tragenden Bereichs konstant verläuft.

2. Gewindeformende Schraube nach Anspruch 1, **dadurch gekennzeichnet, dass** der gewindeformende Gewindeabschnitt (4) einen vom Querschnitt des tragenden Gewindeabschnitts (3) abweichenden Querschnitt aufweist, insbesondere einen trilobularen Querschnitt.

3. Gewindeformende Schraube nach einem der Ansprüche 1 bis 2, **dadurch gekennzeichnet, dass** die Länge LG des tragenden Gewindeabschnitts (3) mindestens der 3-fachen Steigung des Gewindes im tragenden Gewindeabschnitt (3) entspricht.

4. Gewindeformende Schraube nach einem Ansprüche 1 bis 3, **dadurch gekennzeichnet, dass** die Länge LG des tragenden Gewindeabschnitts (3) mindestens das 0,8-fache des Nenndurchmessers DN der Schraube beträgt.

5. Schraubverbindung, umfassend eine gewindeformende Schraube (1) und ein Bauteil (10) mit einer Ausnehmung (11) für diese Schraube (1), **gekennzeichnet durch** eine Schraube (1) nach einem der Ansprüche 1 bis 4.

6. Rohling zur Herstellung einer Schraube nach einem der Ansprüche 1 bis 5, aufweisend einen sich von einer späteren Schraubenspitze weg erstreckenden späteren gewindeformenden Gewindeabschnitt (4) und einen sich daran anschließenden späteren tragenden Gewindeabschnitt (3) mit einem aus dem Rohling herzustellenden tragenden Gewinde sowie gegebenenfalls weitere sich später an den tragenden Bereich anschließende Bereiche, **dadurch gekennzeichnet, dass** der Rohling im späteren tragenden Gewindeabschnitt einen kreisrunden Querschnitt und eine der dem späteren tragenden Gewindeabschnitt entsprechende Konizität aufweist, nämlich in Richtung von der späteren Schraubenspitze weg eine Zunahme eines Außendurchmessers in einem Verhältnis 1:100 bis 1:500 bezogen auf eine Länge des späteren tragenden Gewindeabschnitts, vorzugsweise in einem Verhältnis bis 1:400, wobei die Zunahme des Außendurchmessers über die Länge des späteren tragenden Gewindeabschnitts konstant verläuft.

7. Rohling nach Anspruch 6, **dadurch gekennzeichnet, dass** der Rohling im späteren gewindeformenden Gewindeabschnitt einen kreisrunden oder einen trilobularen Querschnitt aufweist.

## Claims

1. A thread-forming screw having a shaft (1.1) at least partially provided with a thread (2) and a screw tip (1.2) at one end of the shaft (1.1), wherein the shaft (1.1) has a thread-forming thread portion (4) extending away from the screw tip (1.2) and an adjoining supporting thread portion (3), wherein the supporting thread portion (3) has a circular cross-section, **characterized in that** the supporting thread portion (3), in the direction away from the screw tip (1.2), has an increase d of a pitch diameter DF and/or of an outside diameter DA of the thread at a ratio of 1:100 to 1:500 relative to a length LG of the supporting thread portion (3), preferably at a ratio DA or DF to LG up to 1:400, wherein the increase d of the pitch diameter DF and/or of the outside diameter DA is constant over the length LG of the supporting section.

2. The thread-forming screw according to Claim 1, **characterized in that** the thread-forming thread portion (4) has a cross-section deviating from the cross-section of the supporting thread portion (3), in particular a trilobular cross-section.

3. The thread-forming screw according to any one of Claims 1 to 2, **characterized in that** the length LG of the supporting thread portion (3) corresponds at least to the threefold thread pitch in the supporting thread portion (3) .

4. The thread-forming screw according to any one of Claims 1 to 3, **characterized in that** the length LG of the supporting thread portion (3) is at least 0.8 times the nominal diameter DN of the screw.

5. A screw connection comprising a thread-forming screw (1) and a component (10) having a recess (11) for said screw (1), **characterized by** a screw (1) according to any one of Claims 1 to 4.

6. A blank for producing a screw according to any one of Claims 1 to 5, having a future thread-forming thread portion (4) extending away from a future screw tip and an adjoining future supporting thread portion (3) having a supporting thread to be produced from the blank as well as optionally further sections subsequently adjoining the supporting section, **characterized in that** the blank, in the future supporting thread portion, has a circular cross-section and a conicity corresponding to the future supporting thread portion, namely, in the direction away from the future screw tip, an increase of an outside diameter at a ratio of 1:100 to 1:500 relative to a length of the future supporting thread portion, preferably at a ratio up to 1:400, wherein
the increase of the outside diameter is constant over the length of the future supporting thread portion.

7. The blank according to Claim 6, **characterized in that** the blank has a circular or a trilobular cross-section in the subsequent thread-forming thread portion.

## Revendications

1. Vis formant des filets, présentant au moins une tige (1.1) dotée partiellement d'un filetage (2) et une pointe de vis (1.2) à une extrémité de la tige (1.1), dans laquelle la tige (1.1) comporte une partie filetée autotaraudeuse (4) s'étendant loin de la pointe de vis (1.2) et une partie filetée porteuse s'y rattachant (3), dans laquelle la partie filetée porteuse (3) présente une section transversale circulaire, **caractérisée en ce que** la partie filetée porteuse (3) présente dans la direction s'éloignant de la pointe de vis (1.2) une progression d d'un diamètre de flanc DF et/ou d'un diamètre extérieur DA du filetage dans un rapport de 1:100 à 1:500 en référence à une longueur LG de la partie filetée porteuse (3), de préférence dans un rapport DA ou DF à LG jusqu'à 1:400, dans laquelle la progression d du diamètre de flanc DF et/ou du diamètre extérieur DA évolue de manière constante sur la longueur LG de la zone porteuse.

2. Vis formant des filets selon la revendication 1, **caractérisée en ce que** la partie filetée autotaraudeuse (4) présente une section transversale divergeant de la section transversale de la partie filetée porteuse (3), notamment une section transversale trilobulaire.

3. Vis formant des filets selon l'une des revendications 1 à 2, **caractérisée en ce que** la longueur LG de la partie filetée porteuse (3) correspond au moins à 3 fois le pas du filetage dans la partie filetée porteuse (3).

4. Vis formant des filets selon l'une des revendications 1 à 3, **caractérisée en ce que** la longueur LG de la partie filetée porteuse (3) s'élève au moins à 0,8 fois le diamètre nominal DN de la vis.

5. Raccord fileté, comprenant une vis formant des filets (1) et un composant (10) avec une cavité (11) pour recevoir cette vis (1), **caractérisé par** une vis (1) selon l'une des revendications 1 à 4.

6. Ébauche pour la fabrication d'une vis selon l'une des revendications 1 à 5, présentant une partie filetée autotaraudeuse postérieure s'étendant loin de la pointe de vis (4) et une partie filetée porteuse postérieure s'y rattachant (3) avec un filetage porteur à fabriquer à partir de l'ébauche ainsi que, le cas échéant, d'autres zones se rattachant postérieurement à la zone porteuse, **caractérisée en ce que** l'ébauche présente une section transversale circulaire dans la partie filetée porteuse postérieure et une conicité correspondant à la partie filetée porteuse postérieure, à savoir dans la direction s'éloignant de la pointe de vis postérieure une progression d'un diamètre extérieur dans un rapport de 1:100 à 1:500 en référence à une longueur de la partie filetée porteuse postérieure, de préférence dans un rapport jusqu'à 1:400, dans laquelle la progression du diamètre extérieur évolue de manière constante sur la longueur de la partie filetée porteuse postérieure.

7. Ébauche selon la revendication 6, **caractérisée en ce que** l'ébauche présente une section transversale circulaire ou trilobulaire dans la partie filetée autotaraudeuse postérieure.
